(19) Europäisches Patentamt / European Patent Office / Office européen des brevets

(11) **EP 4 629 140 A1**

(12) **EUROPEAN PATENT APPLICATION**
published in accordance with Art. 153(4) EPC

(43) Date of publication:
**08.10.2025 Bulletin 2025/41**

(21) Application number: **22967177.1**

(22) Date of filing: **30.11.2022**

(51) International Patent Classification (IPC):
***G06N 10/20*** (2022.01)

(52) Cooperative Patent Classification (CPC):
**G06N 10/20**

(86) International application number:
**PCT/JP2022/044229**

(87) International publication number:
**WO 2024/116344 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
• **ISHII, Masatoshi**
  **Kawasaki-shi, Kanagawa 211-8588 (JP)**
• **KURITA, Tomochika**
  **Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **QUANTUM CIRCUIT DESIGN PROGRAM, QUANTUM CIRCUIT DESIGN METHOD, AND QUANTUM CIRCUIT DESIGN DEVICE**

(57)    To suppress the effects of noise.

A quantum circuit design apparatus (10) detects, from a first quantum circuit (1), a partial circuit (1c) having consecutive first 2-qubit gate (1a) and second 2-qubit gate (1b), the first 2-qubit gate (1a) having a first qubit as a control bit and a second qubit as a target bit, and the second 2-qubit gate (1b) having the second qubit as a control bit and the first qubit as a target bit. The quantum circuit design apparatus (10) transforms the first 2-qubit gate (1a) into a first equivalent circuit (2a) corresponding to a first global phase and transforms the second 2-qubit gate (1b) into a second equivalent circuit (2b) corresponding to a second global phase different from the first global phase to thereby generate a second quantum circuit (2).

FIG. 1

**Description**

Technical Field

The embodiments discussed herein relate to a quantum circuit design program, a quantum circuit design method, and a quantum circuit design apparatus.

Background Art

Currently available quantum computers are of a type called noisy intermediate-scale quantum computer (NISQ) using superconducting or ion trap qubits. In these quantum devices, the error rate is about 1% and the number of qubits is about 10 to 1000. Such small quantum computers are not able to completely correct errors. Therefore, when quantum computation is executed on a quantum computer, it is important to perform the quantum computation by a quantum circuit for reducing errors as much as possible.

A quantum computer is equipped with 1- and 2-qubit gates as quantum gates for operating qubits. These quantum gates are called native gates. Which types of 2-qubit gates are supported as native gates depends on a system of a quantum device employed in the quantum computer.

On the other hand, a quantum circuit created for a problem to be solved may include quantum gates other than native gates. Therefore, the quantum gates other than native gates are transformed into equivalent circuits composed of native gates and then implemented in a qubit control device that performs qubit gate operations. For example, a 3-qubit gate, such as a Toffoli (CCX) gate, is implemented using a plurality of 2-qubit gates. A CnX gate or a CnZ gate (n is an integer of 3 or more) having three or more control bits is transformed into a plurality of CCX gates and then further transformed into native gates.

As a technique related to a quantum circuit, for example, there is a proposed quantum circuit for solving a problem of a partially observable Markov decision process by a quantum algorithm. There is also a proposed system for improving fidelity of a quantum operation on a qubit of interest. In addition, there is a proposed method of encoding bits by qubits to perform information-theoretically secure quantum gate computation. Further, there is a proposed system for preserving quantum coherence of a qubit.

Citation List

Patent Literature

Patent Literature 1: International Publication Pamphlet No. WO2022/059255
Patent Literature 2: Japanese National Publication of International Patent Application No. 2014-503890
Patent Literature 3: U.S. Patent Application Publication No. 2022/0231844
Patent Literature 4: U.S. Patent Application Publication No. 2018/0314969

Summary of Invention

Technical Problem

In current NISQ devices, 2-qubit gates have noise that is about an order of magnitude higher than 1-qubit gates, and therefore have a greater impact on quantum computing compared to 1-qubit gates. When a quantum gate that is not supported by a quantum device of a quantum computer is transformed into an equivalent circuit composed of native gates, there may be a plurality of equivalent circuits to which the transformation may be made. In this case, it is desirable to make a transformation into an equivalent circuit less affected by noise among the plurality of equivalent circuits.

One aspect aims to suppress the effects of noise.

Solution to Problem

According to one aspect, a quantum circuit design program is provided that causes a computer to execute the following processes.

The computer detects, from a first quantum circuit, a partial circuit in which a first 2-qubit gate and a second 2-qubit gate are consecutively arranged, the first 2-qubit gate having a first qubit as a control bit and a second qubit as a target bit, and the second 2-qubit gate having the second qubit as a control bit and the first qubit as a target bit and indicating a same type of gate operation as the first 2-qubit gate; and transforms the first 2-qubit gate in the partial circuit into a first equivalent circuit corresponding to a first global phase and transforms the second 2-qubit gate in the partial circuit into a second equivalent circuit corresponding to a second global phase different from the first global phase to thereby generate a second quantum circuit in which the first 2-qubit gate and the second 2-qubit gate in the first quantum circuit are replaced with the first equivalent circuit and the second equivalent circuit, respectively.

Advantageous Effects of Invention

According to one aspect, it is possible to suppress the effects of noise.

The above and other objects, features and advantages of the present invention will become apparent from the following description taken in conjunction with the accompanying drawings which illustrate, by way of example, preferred embodiments of the invention.

Brief Description of Drawings

FIG. 1 illustrates an example of a quantum circuit design method according to a first embodiment.
FIG. 2 illustrates an example of a system configuration according to a second embodiment.
FIG. 3 illustrates a configuration example of hardware of a control computer.
FIG. 4 is a block diagram illustrating an example of functions of the control computer.
FIG. 5 illustrates an example of two consecutive CX gates in which control and target bits of one CX gate are located opposite control and target bits of the other CX gate, respectively.
FIG. 6 illustrates an example of an equivalent circuit of a SWAP gate.
FIG. 7 illustrates an example of equivalent circuits of a CCZ gate.
FIG. 8 illustrates an example of an equivalent circuit of a CCZ gate.
FIG. 9 illustrates a global phase.
FIG. 10 illustrates an example of an implementation of CX gates with different global phases.
FIG. 11 illustrates an example of equivalent circuits of a CX gate, using RZX gates.
FIG. 12 is a flowchart illustrating an example of a procedure of a quantum circuit transformation process.
FIG. 13 illustrates an example of transformation results of a quantum circuit.
FIG. 14 illustrates an example of combination patterns of global phases in consecutive CX gates.
FIG. 15 illustrates an example of analysis results of a degree of noise effects.
FIG. 16 illustrates an example of a combination of values of $\gamma$ whose rotation directions are opposite to one another.

Description of Embodiments

Hereinafter, embodiments will be described with reference to the drawings. These embodiments may be combined with each other unless they have contradictory features.

First Embodiment

A first embodiment is a quantum circuit design method for generating a quantum circuit in which the effects of noise is suppressed.

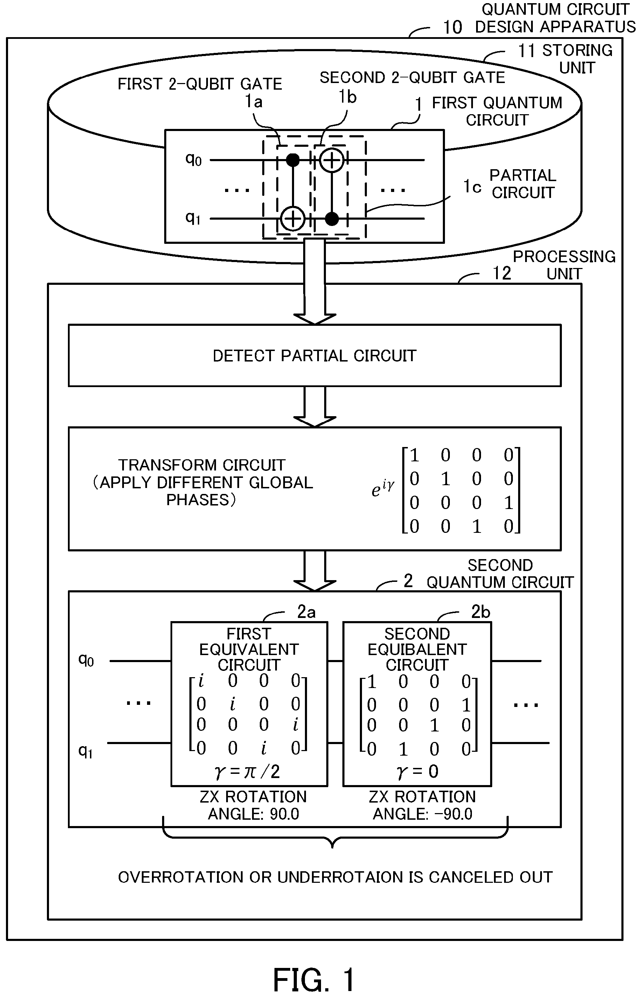

FIG. 1 illustrates an example of a quantum circuit design method according to the first embodiment. FIG. 1 depicts a quantum circuit design apparatus 10 for implementing the quantum circuit design method. The quantum circuit design apparatus 10 may implement the quantum circuit design method according to the first embodiment by executing, for example, a predetermined quantum circuit design program.

The quantum circuit design apparatus 10 includes a storing unit 11 and a processing unit 12. The storing unit 11 is, for example, a memory or a storage device included in the quantum circuit design apparatus 10. The processing unit 12 is, for example, a processor or an arithmetic circuit included in the quantum circuit design apparatus 10.

The storing unit 11 stores a first quantum circuit 1 in which a quantum computing procedure is indicated. The processing unit 12 generates, based on the first quantum circuit 1, a second quantum circuit 2 in which the effects of noise is suppressed. For example, the processing unit 12 executes the following processing.

The processing unit 12 detects, from the first quantum circuit 1, a partial circuit 1c having consecutive first 2-qubit gate 1a and second 2-qubit gate 1b. The first 2-qubit gate 1a is a gate that has a first qubit as a control bit and a second qubit as a target bit. The second 2-qubit gate 1b is a gate that has the second qubit as a control bit and the first qubit as a target bit, and indicates the same type of gate operation as the first 2-qubit gate 1a. For example, the first 2-qubit gate 1a and the second 2-qubit gate 1b are both CX gates.

Next, the processing unit 12 transforms the first 2-qubit gate 1a in the partial circuit 1c into a first equivalent circuit 2a corresponding to a first global phase. The processing unit 12 also transforms the second 2-qubit gate 1b in the partial circuit 1c into a second equivalent circuit 2b corresponding to a second global phase, which is different from the first global phase. The first equivalent circuit 2a and the second equivalent circuit 2b are, for example, circuits using cross resonance gates.

For example, the processing unit 12 generates the first equivalent circuit 2a indicating a gate operation of a rotation angle in a first rotation direction related to an interaction between two axes, and generates the second equivalent circuit 2b indicating a gate operation of a rotation angle in a second rotation direction opposite to the first rotation direction related to the interaction between the two axes. The interaction between the two axes is, for example, a ZX interaction.

The global phases in which the rotation directions related to the interaction between the two axes are opposite to each other are, for example, a global phase having a rotation angle of 0 degrees and a global phase having a rotation angle of $\pi/2$. When these global phases are used, the processing unit 12 generates the first equivalent circuit 2a with the rotation angle of the first global phase being 0 or $\pi/2$. When the rotation angle of the first global phase is 0, the processing unit 12 generates the second equivalent circuit 2b corresponding to the second global phase with a rotation angle of $\pi/2$. When the rotation angle of the first global phase is $\pi/2$, the processing unit 12 generates the second equivalent circuit 2b corresponding to the second global phase with a rotation angle of 0.

Then, the processing unit 12 generates the second quantum circuit 2 in which the first 2-qubit gate 1a and the second 2-qubit gate 1b in the first quantum circuit 1 are replaced with the first equivalent circuit 2a and the second equivalent circuit 2b, respectively.

In this way, based on the first quantum circuit 1, the second quantum circuit 2 is generated in which noise due to over- or under-rotation is reduced. For example, assuming that the first 2-qubit gate 1a and the second 2-qubit gate 1b are CX gates, when the first global phase is "$e^{i\gamma}\,(\gamma=\pi/2)$", the second global phase is "$e^{i\gamma}\,(\gamma=0)$". When the first equivalent circuit 2a is generated by applying the global phase "$e^{i\gamma}\,(\gamma=\pi/2)$", the ZX rotation angle of the gate operation by the first equivalent circuit 2a is "90.0". When the second equivalent circuit 2b is generated by applying the global phase "$e^{i\gamma}\,(\gamma=0)$", the ZX rotation angle of the gate operation by the second equivalent circuit 2b is "-90.0". That is, the rotation directions of the gate operation by the first equivalent circuit 2a and the gate operation by the second equivalent circuit 2b are opposite to each other. Thus, the rotations in the directions opposite to each other cancel out noise due to over- or under-rotation. As a result, the effects of noise are reduced.

In the first quantum circuit 1, the first and second 2-qubit gates 1a and 1b may be alternately repeated a plurality of times. Therefore, the processing unit 12 may detect the partial circuit 1c in which the first and second 2-qubit gates 1a and 1b alternately repeated a plurality of times. In this case, the processing unit 12 transforms each of the plurality of first 2-qubit gates 1a included in the partial circuit 1c into the first equivalent circuit 2a. The processing unit 12 also transforms each of the plurality of second 2-qubit gates 1b included in the partial circuit 1c into the second equivalent circuit 2b. In this manner, the second quantum circuit 2 with reduced noise is easily produced.

Second Embodiment

A second embodiment is a system for executing quantum computation in a quantum circuit in which noise due to over- or under-rotation is reduced. Noise due to over- or under-rotation is also called coherent noise.

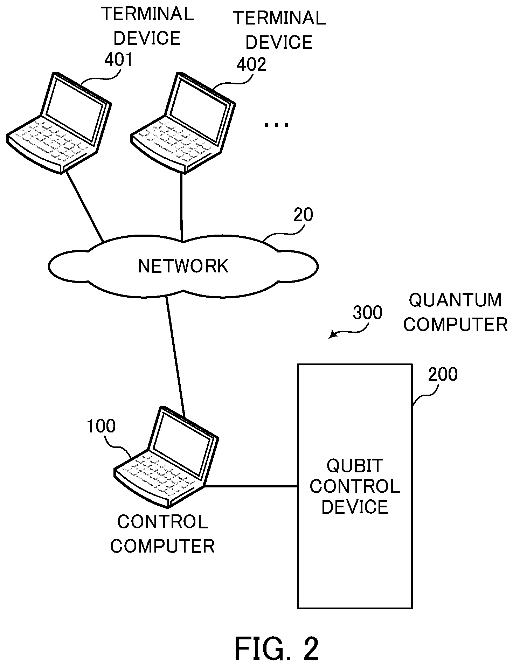

FIG. 2 illustrates an example of a system configuration according to the second embodiment. A quantum computer 300 is a gated quantum computer. The quantum computer 300 includes a control computer 100 and a qubit control device 200. Terminal devices 401, 402, and so on are connected to the control computer 100 via a network 20. The terminal devices 401, 402, and so on are computers used by users who request quantum computation by the quantum computer 300. The control computer 100 receives quantum circuits from the terminal devices 401, 402, and so on. Each quantum circuit indicates the order of operations on qubits by the arrangement of elements, such as gates. Each qubit is capable of representing a state of superposition of a state of "0" and a state of "1".

The control computer 100 instructs the qubit control device 200 to control qubits according to the quantum circuits received from the terminal devices 401, 402, and so on. In addition, the control computer 100 acquires measurement results of each qubit from the qubit control device 200.

The qubit control device 200 includes a plurality of qubits and devices each for operating one of the plurality of qubits. The plurality of qubits included in the qubit control device 200 may be of, for example, a superconducting system or an ion trap system. Alternatively, the plurality of qubits may be of a diamond spin system. When the qubits are superconducting based, the qubit control device 200 may include a refrigerator for cooling the qubits.

The qubit control device 200 irradiates a qubit with a microwave, for example, in response to an instruction from the control computer 100. Each of the devices for operating one of the plurality of qubits measures the state of the qubit and transmits the measurement results to the control computer 100.

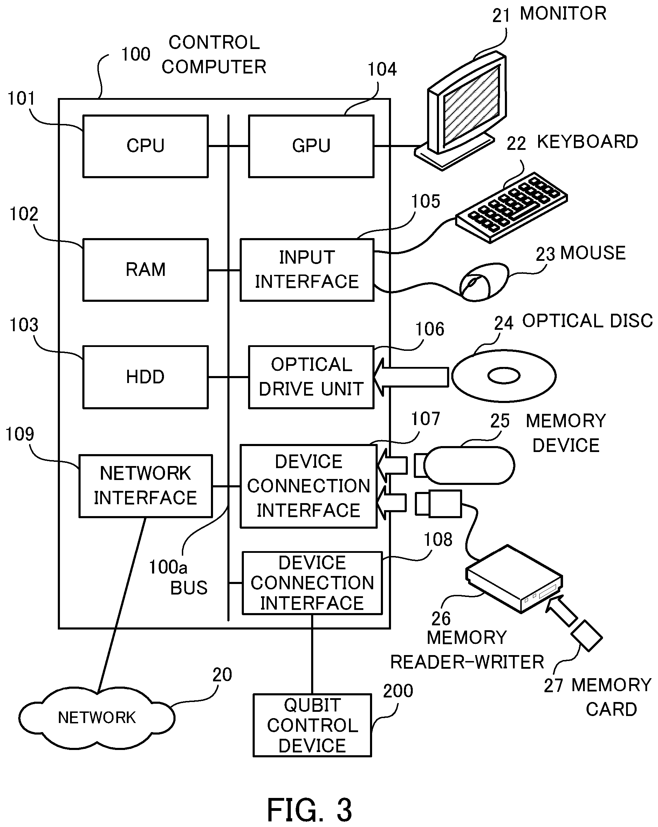

FIG. 3 illustrates a configuration example of hardware of a control computer. The entire control computer 100 is controlled by a central processing unit (CPU) 101. The CPU 101 is a processor that executes instructions of a program. The CPU 101 may include a plurality of processor cores. The CPU 101 may include a plurality of processors and may be a micro processing unit (MPU), a digital signal processor (DSP), or the like. At least a part of functions realized by the CPU 101 executing the program may be realized by an electronic circuit, such as an application specific integrated circuit (ASIC) or a programmable logic device (PLD). A random access memory (RAM) 102 and a plurality of peripheral devices are connected to the CPU 101 via a bus 100a.

The RAM 102 is a main storage device of the control computer 100. The RAM 102 temporarily stores at least part of an operating system (OS) program and application programs to be executed by the CPU 101. The RAM 102 stores various data used for processing by the CPU 101. The control computer 100 may include a memory of a type other than the RAM, or may include a plurality of memories.

The peripheral devices connected to the bus 100a include a hard disk drive (HDD) 103, a graphics processing unit (GPU) 104, an input interface 105, an optical drive unit 106, device connection interfaces 107 and 108, and a network interface 109.

The HDD 103 is an auxiliary storage device of the control computer 100. The HDD 103 magnetically writes and reads data to and from a built-in magnetic disk. The HDD 103 stores OS programs, application programs, and various data. The control computer 100 may include another type of auxiliary storage device such as a flash memory or a solid state drive (SSD), or may include a plurality of auxiliary storage devices.

A monitor 21 is connected to the GPU 104. The GPU 104 displays an image on the screen of the monitor 21 in accordance with an instruction from the CPU 101. Examples of the monitor 21 include a display device using organic electro luminescence (EL), a liquid crystal display device, and the like.

A keyboard 22 and a mouse 23 are connected to the input interface 105. The input interface 105 transmits signals sent from the keyboard 22 and the mouse 23 to the CPU 101. The mouse 23 is an example of a pointing device, and other pointing devices may be used. Examples of other pointing devices include a touch panel, a tablet, a touch pad, and a track ball.

The optical drive unit 106 uses laser light or the like to read data recorded on an optical disc 24. The optical disc 24 is a portable recording medium on which data is recorded so as to be read by reflection of light. The optical disc 24 may be a digital versatile disc (DVD), a DVD-RAM, a compact disc read-only memory (CD-ROM), a CD-recordable (CD-R), a CD-rewritable (CD-RW), or the like.

The device connection interface 107 is a communication interface for connecting peripheral devices to the control computer 100. For example, a memory device 25 and a memory reader-writer 26 may be connected to the device connection interface 107. The memory device 25 is a recording medium having a function of communicating with the device connection interface 107. The memory reader-writer 26 is a device that writes data to a memory card 27 or reads data from the memory card 27. The memory card 27 is a card-type recording medium.

The device connection interface 108 is a communication interface for connecting the qubit control device 200 to the control computer 100. The control computer 100 transmits instructions for controlling qubits to the qubit control device 200 via the device connection interface 108.

The network interface 109 is connected to the network 20. The network interface 109 transmits and receives data to and from other computers or communication devices via the network 20.

The control computer 100 may realize processing functions of the second embodiment by the hardware configuration as described above. The quantum circuit design apparatus 10 of the first embodiment may also be realized by hardware similar to the control computer 100 depicted in FIG. 3. The CPU 101 is an example of the processing unit 12 described in the first embodiment.

The control computer 100 realizes the processing functions of the second embodiment by executing a program recorded in a computer-readable recording medium, for example. The program describing processing contents to be executed by the control computer 100 may be recorded in various recording media. For example, the program to be executed by the control computer 100 may be stored in the HDD 103. The CPU 101 loads at least a part of the program in the HDD 103 into the RAM 102 and executes the program. The program to be executed by the control computer 100 may be recorded in a portable recording medium, such as the optical disc 24, the memory device 25, or the memory card 27. The program stored in the portable recording medium becomes executable after being installed in the HDD 103 under the control of the CPU 101, for example. Alternatively, the CPU 101 may read the program directly from the portable recording medium and execute the program.

In the system as described above, the control computer 100 acquires, from the terminal devices 401, 402, and so on, quantum circuits in each of which a procedure of gate operations on qubits for quantum computation is described. The quantum circuits acquired from the terminal devices 401, 402, and so on include gate operations of 3- or more qubit gates. On the other hand, gate operations in the qubit control device 200 are limited to gate operations of 1- or 2-qubit gates. Therefore, the control computer 100 transforms the quantum gates of 3- or more qubit gates included in the quantum circuits acquired from the terminal devices 401, 402, and so on into equivalent circuits using 1- or 2-qubit gates executable by the qubit control device 200. Then, the control computer 100 instructs the quantum computer 300 to perform quantum computation by the transformed quantum circuits.

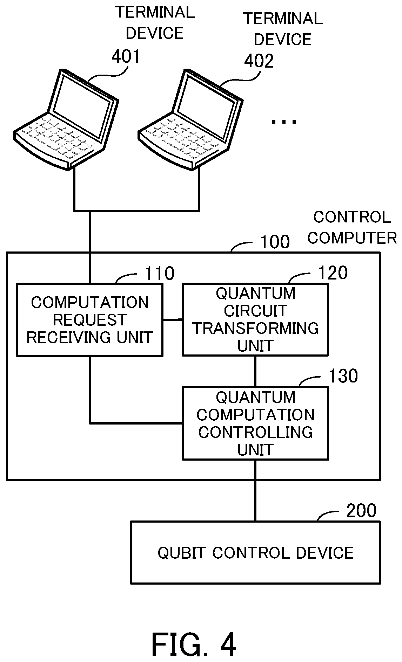

FIG. 4 is a block diagram illustrating an example of functions of a control computer. The control computer 100 includes a computation request receiving unit 110, a quantum circuit transforming unit 120, and a quantum computation controlling unit 130.

The computation request receiving unit 110 receives computation requests for quantum computation from the terminal devices 401, 402, and so on. Each computation request includes, for example, a quantum circuit including 3- or more qubit gates. The computation request receiving unit 110 requests the quantum circuit transforming unit 120 to transform the acquired quantum circuit. Upon receiving computation results from the quantum computation controlling unit 130, the computation request receiving unit 110 transmits the computation results to a terminal device that sent the computation request.

The quantum circuit transforming unit 120 transforms the quantum circuit acquired from the computation request receiving unit 110 into a quantum circuit using native gates of the qubit control device 200. When the acquired quantum circuit includes consecutive CX gates, the quantum circuit transforming unit 120 transforms the CX gates into equivalent circuits that reduce noise due to over-rotation. The quantum circuit transforming unit 120 transmits the transformed quantum circuit to the quantum computation controlling unit 130.

The quantum computation controlling unit 130 instructs the qubit control device 200 to perform gate operations on qubits according to the quantum circuit acquired from the quantum circuit transforming unit 120. When the gate operations according to the quantum circuit end, the quantum computation controlling unit 130 receives measurement results of the states of the qubits from the qubit control device 200. The quantum computation controlling unit 130 calculates a solution (e.g., a minimum value of energy) of a computation target problem based on the measurement results, and transmits the solution to the computation request receiving unit 110 as the results of the quantum computation.

The function of each element illustrated in FIG. 4 may be realized by causing a computer to execute a program module corresponding to the element, for example.

Next, a method of reducing noise due to over- or under-rotation will be described in detail. Noise due to over- or under-rotation is one of major noises. It is desirable to reduce the effects of noise due to over- or under-rotation as much as possible when implemented in a device, or to reduce the effects by introducing an error mitigation technique. Over-rotation means that a rotation angle becomes larger than a target angle in a rotation operation of the state of a qubit in a predetermined direction. In contrast to over-rotation, under-rotation means that the rotation angle becomes smaller than the target angle.

Here, attention is paid to two consecutive CX gates in which their control bits and target bits are opposite to each other. A CX gate is also called a CNOT gate, and is a gate that flips the state of the target bit between $|0\rangle$ and $|1\rangle$ when the state of the control bit is $|1\rangle$.

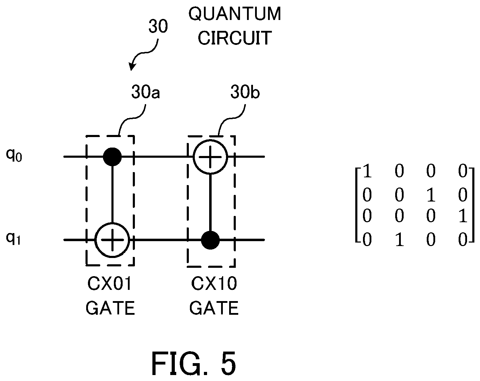

FIG. 5 illustrates an example of two consecutive CX gates in which control and target bits of one CX gate are located opposite control and target bits of the other CX gate, respectively. A quantum circuit 30 includes two CX gates 30a and 30b. In the CX gates 30a and 30b, a symbol obtained by combining a circle and + is arranged on a line corresponding to a qubit serving as a target bit, and a point connected to the symbol by a line is arranged on a line corresponding to a qubit serving as a control bit.

In the CX gate 30a, a qubit $q_0$ is a control bit, and a qubit $q_1$ is a target bit. The CX gate 30a with this configuration is particularly referred to as a "CX01 gate". In the CX gate 30b, the qubit $q_1$ is a control bit, and the qubit $q_0$ is a target bit. The CX gate 30b with this configuration is particularly referred to as a "CX10 gate". When the operation by the quantum circuit 30 is expressed by a matrix, Expression (1) below is obtained.

$$\begin{bmatrix} 1 & 0 & 0 & 0 \\ 0 & 0 & 1 & 0 \\ 0 & 0 & 0 & 1 \\ 0 & 1 & 0 & 0 \end{bmatrix} \tag{1}$$

The quantum circuit 30 occurs, for example, when a SWAP gate is implemented. The SWAP gate is a gate that performs an operation of exchanging states of two qubits.

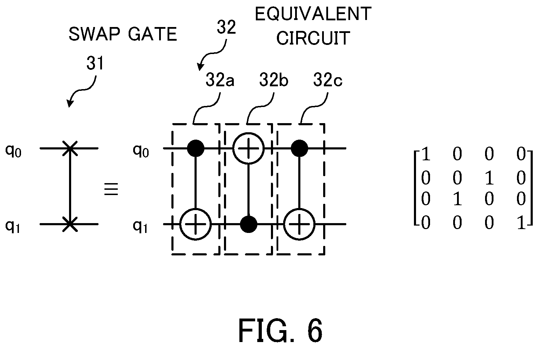

FIG. 6 illustrates an example of an equivalent circuit of a SWAP gate. When the operation by a SWAP gate 31 is expressed by a matrix, Expression (2) below is obtained.

$$\begin{bmatrix} 1 & 0 & 0 & 0 \\ 0 & 0 & 1 & 0 \\ 0 & 1 & 0 & 0 \\ 0 & 0 & 0 & 1 \end{bmatrix} \qquad (2)$$

The SWAP gate 31 may be represented by an equivalent circuit 32 using three CX gates 32a to 32c. The first CX gate 32a is a "CX01 gate" in which the qubit $q_0$ is a control bit and the qubit $q_1$ is a target bit. The second CX gate 32b is a "CX10 gate" in which the qubit $q_1$ is a control bit and the qubit $q_0$ is a target bit. The third CX gate 32c is a "CX01 gate" in which the qubit $q_0$ is a control bit and the qubit $q_1$ is a target bit.

The SWAP gate as depicted in FIG. 6 is a gate frequently used in quantum computation using a quantum computer having a large number of qubits. That is, in a quantum computer having a large number of qubits, a large number of quantum devices (for example, superconducting devices) corresponding to the qubits are not fully coupled. On the other hand, an operation of a 2-qubit gate is enabled when two quantum devices corresponding to qubits to be operated are coupled. When the two quantum devices corresponding to the qubits to be operated by the 2-qubit gate are not coupled, the quantum devices indicating the states of the qubits are changed using a SWAP gate, and the states of the qubits to be operated are represented by two coupled quantum devices. This allows the operation of the intended 2-qubit gate.

As described above, in quantum computation using a quantum computer having a large number of qubits, many SWAP gates are operated. That is, a quantum circuit executed by a quantum computer includes many SWAP gates.

For example, a CCZ gate is a gate operation using a SWAP gate at the time of implementation.

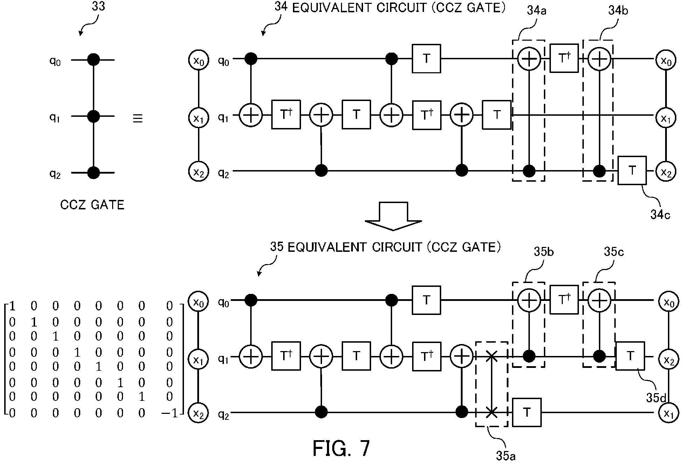

FIG. 7 illustrates an example of equivalent circuits of a CCZ gate. When a gate operation of a CCZ gate 33 is expressed by a matrix, Expression (3) below is obtained.

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \\ 0 & 0 & 0 & 0 & 1 & 0 & 0 & 0 \\ 0 & 0 & 0 & 0 & 0 & 1 & 0 & 0 \\ 0 & 0 & 0 & 0 & 0 & 0 & 1 & 0 \\ 0 & 0 & 0 & 0 & 0 & 0 & 0 & -1 \end{bmatrix} \qquad (3)$$

An equivalent circuit 34 is equivalent to the CCZ gate 33 on qubits $q_0$, $q_1$, and $q_2$, and is a quantum circuit in which 1- and 2-qubit gates are combined. In the equivalent circuit 34, blocks denoted by T arranged on horizontal lines individually corresponding to the qubits $q_0$, $q_1$, and $q_2$ represent T gates. Each T gate indicates an operation of shifting the phase by a predetermined value. Blocks denoted by $T^\dagger$ arranged on horizontal lines individually corresponding to the qubits $q_0$, $q_1$, and $q_2$ in the equivalent circuit 34 represent $T^\dagger$ gates. Each $T^\dagger$ gate indicates an operation of shifting the phase by a predetermined value in a direction opposite to that of the T gate. The equivalent circuit 34 includes a plurality of CX gates each represented by a symbol made by combining a circle and + and a point connected to the symbol by a line.

As described above, the CCZ gate 33 may be transformed into the equivalent circuit 34 in which 1- and 2-qubit gates are combined. However, the equivalent circuit 34 includes CX gates 34a and 34b on the qubits $q_0$ and $q_2$. In the qubit control device 200, the operation of a 2-qubit gate is executable only between connected two qubits. When actual qubits in the qubit control device 200 are allocated to qubits indicated by a quantum circuit, connected qubits among the actual qubits are allocated to qubits adjacent to each other on the quantum circuit. However, there is a possibility that qubits that are not connected among the actual qubits are allocated to qubits not adjacent to each other on the quantum circuit. In this case, the equivalent circuit 34 is transformed into an equivalent circuit 35 using a SWAP gate 35a.

In the equivalent circuit 35, the SWAP gate 35a is inserted at a position before the CX gates 34a and 34b in the equivalent circuit 34. Since the SWAP gate 35a is inserted, the CX gates 34a and 34b are replaced with CX gates 35b and 35c on the qubits $q_0$ and $q_1$. A last T gate 34c on the qubit $q_2$ in the equivalent circuit 34 is replaced with a last T gate 35d on the qubit $q_1$ in the equivalent circuit 35.

Note that, in the equivalent circuit 35, allocation of actual qubits in the qubit control device 200 to qubits to be subjected to quantum computation in a quantum algorithm is different before and after execution of the equivalent circuit 35. Therefore, between the equivalent circuits 34 and 35, there is a difference in the quantum state measured at each of the qubits q0, q1, and q2 after execution.

For example, assume that qubits to be subjected to quantum computation in a quantum algorithm are $x_0$, $x_1$, and $x_2$. When the equivalent circuit 34 is executed, assume that the actual qubit $q_0$ in the qubit control device 200 is allocated to the qubit $x_0$. Further, assume that the actual qubit $q_1$ in the qubit control device 200 is allocated to the qubit $x_1$. Assume also that the actual qubit $q_2$ in the qubit control device 200 is allocated to the qubit $x_2$. When the equivalent circuit 34 is executable, the quantum state of the qubit $x_0$ is obtained by measuring the qubit $q_0$, the quantum state of the qubit $x_1$ is obtained by measuring the qubit $q_1$, and the quantum state of the qubit $x_2$ is obtained by measuring the qubit $q_2$.

If the qubits $q_0$ and $q_1$ are not connected in the qubit control device 200, the equivalent circuit 34 is not executable. In this case, the equivalent circuit 35 is executed. Since the equivalent circuit 35 includes the SWAP gate 35a, the actual qubits to be allocated are changed for the qubits $x_1$ and $x_2$ whose states are exchanged by the SWAP gate 35a.

For example, to the qubit $x_1$ in the quantum algorithm, the qubit $q_1$ is allocated at the start of the execution of the equivalent circuit 35, but the qubit $q_2$ is allocated at the end of the execution of the equivalent circuit 35. To the qubit $x_2$ in the quantum algorithm, the qubit $q_2$ is allocated at the start of the execution of the equivalent circuit 35, but the qubit $q_1$ is allocated at the end of the execution of the equivalent circuit 35. In this case, after executing the equivalent circuit 35, the quantum state of the qubit $x_0$ is obtained by measuring the qubit $q_0$, the quantum state of the qubit $x_2$ is obtained by measuring the qubit $q_1$, and the quantum state of the qubit $x_1$ is obtained by measuring the qubit $q_2$.

When a quantum circuit including the equivalent circuit 35 is executed by the qubit control device 200, the SWAP gate 35a in the equivalent circuit 35 is transformed into a combination of CX gates.

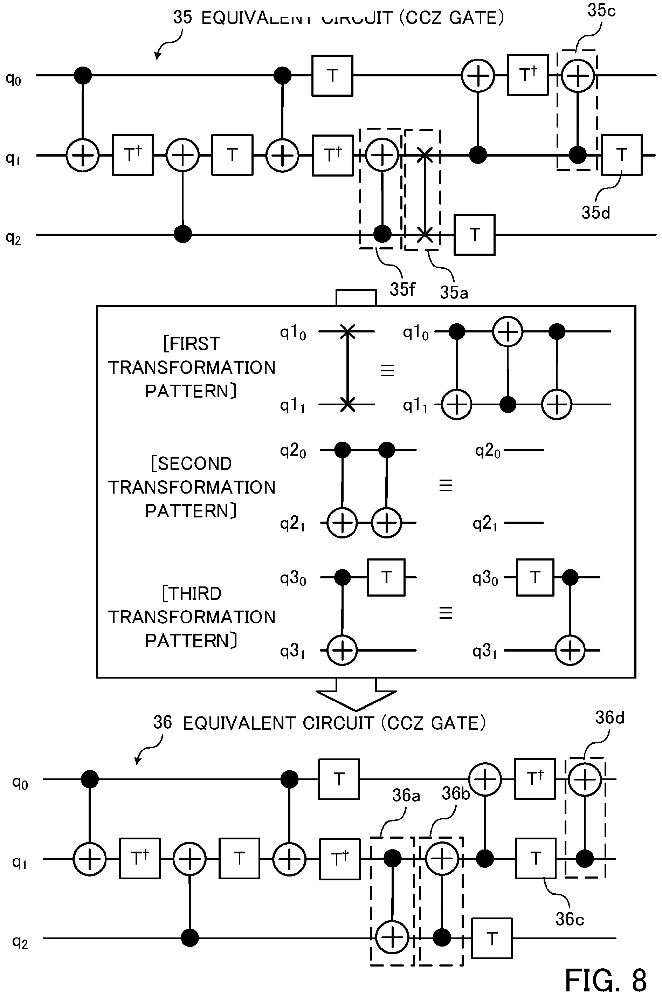

FIG. 8 illustrates an example of an equivalent circuit of a CCZ gate. In the example of FIG. 8, circuit transformations depicted in three transformation patterns are performed on the equivalent circuit 35 to form an equivalent circuit 36.

The first transformation pattern is a transformation from a SWAP gate to three CX gates. The second transformation pattern indicates that having two consecutive CX gates in which their control bits and target bits are respectively on common qubits is the same as performing no gate operation, and therefore these CX gates are deletable. The third transformation pattern indicates that, when a T gate is located before or after the control bit of a CX gate, the positions of the control bit of the CX gate and the T gate may be swapped.

For example, according to the first transformation pattern, the SWAP gate 35a of the equivalent circuit 35 is transformed into three CX gates with a qubit $q1_0$ in the first transformation pattern as the qubit $q_2$ of the equivalent circuit 35 and a qubit $q1_1$ as the qubit $q_1$ of the equivalent circuit 35. In this case, in the first CX gate of the three CX gates after transformation, the qubit $q_2$ is a control bit and the qubit $q_1$ is a target bit.

Then, in the equivalent circuit 35, the first one of the three CX gates transformed from the SWAP gate 35a and a CX gate 35f immediately before the SWAP gate 35a have their control bits and target bits respectively on common qubits. In this case, the second transformation pattern may be applied. As a result, the first of the three CX gates transformed from the SWAP gate 35a and the CX gate 35f immediately before the SWAP gate 35a are deleted. That is, among the three CX gates obtained by transforming the SWAP gate 35a with the first transformation pattern, a second CX gate 36a and a third CX gate 36b remain in the equivalent circuit 36 after the transformation.

On the qubit $q_1$ in the equivalent circuit 35, the control bit of a CX gate 35c is arranged before the last T gate 35d. In this case, the third transformation pattern is applied to move the T gate 35d in front of the CX gate 35c. As a result, in the equivalent circuit 36 after transformation, a T gate 36c corresponding to the T gate 35d is arranged on the qubit $q_1$ before a last CX gate 36d.

Note here that the gate operation time of a 2-qubit is ten times or more the gate operation time of a 1-qubit gate. Therefore, the number of 2-qubit gates may be used as an index of the gate operation time for the equivalent circuit 36 after transformation. 2-qubit gates included in the equivalent circuit 36 are seven CX gates. That is, in a fully coupled device, a CCZ gate may be implemented by six CX gates using the equivalent circuit 34 depicted in FIG. 7; however, in a partially coupled device, the number of CX gates used for implementing a CCZ gate is increased to seven as depicted in FIG. 8.

Such an increase in the number of CX gates causes an increase in noise. In view of this, the control computer 100 reduces noise by implementing different global phases for individual CX gates when there are two consecutive CX gates as illustrated in FIG. 5 (the CX gates 30a and 30b in the example of FIG. 5), one of which is a CX01 gate, and the other is a CX10 gate. In the example of the equivalent circuit 36 depicted in FIG. 8, the CX gate 36a and the CX gate 36b are transformed into equivalent circuits that reduce noise.

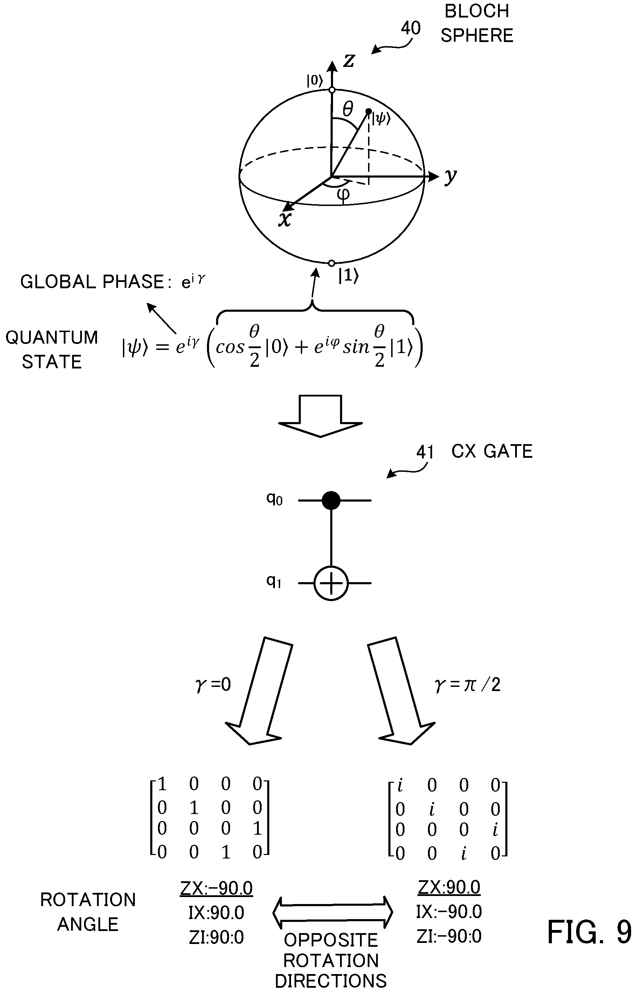

FIG. 9 illustrates a global phase. A quantum state $|\psi\rangle$ is expressed by Expression (4) below.

$$|\psi\rangle = e^{i\gamma}\left(cos\frac{\theta}{2}|0\rangle + e^{i\varphi}sin\frac{\theta}{2}|1\rangle\right) \qquad (4)$$

$\theta$ and $\varphi$ are parameters (real numbers) that specify one point on the spherical surface when a quantum state is represented by a Bloch sphere 40. In Expression (4), "$e^{i\gamma}$" is the global phase. e is the Napier's constant. i is an imaginary

unit. $\gamma$ is a parameter (real number) indicating a rotation angle of the global phase. Thus, the global phase is not represented by the Bloch sphere 40. The global phase does not affect the quantum state if noise is not considered. Therefore, in quantum computation, the global phase is often ignored.

When a unitary matrix representing a gate operation is expressed without ignoring the global phase "$e^{i\gamma}$", Expression (5) is obtained.

$$e^{i\gamma} \begin{pmatrix} a & b \\ c & d \end{pmatrix} \tag{5}$$

A CX gate 41 may be implemented in consideration of the global phase. When the global phase is different, a rotation direction in the interaction between two axes is different. For example, when "$\gamma = 0$", "$e^{i\gamma} = 1$". Then, a matrix representing the CX gate is indicated by Expression (6).

$$\begin{bmatrix} 1 & 0 & 0 & 0 \\ 0 & 1 & 0 & 0 \\ 0 & 0 & 0 & 1 \\ 0 & 0 & 1 & 0 \end{bmatrix} \tag{6}$$

At this time, the rotation angle of the ZX interaction when the CX gate 41 is operated is "-90.0". The rotation angle of IX and the rotation angle of ZI are both "90.0". On the other hand, when "$\gamma = \pi/2$", "$e^{i\gamma} = i$". Then, a matrix representing the CX gate is indicated by Expression (7).

$$\begin{bmatrix} i & 0 & 0 & 0 \\ 0 & i & 0 & 0 \\ 0 & 0 & 0 & i \\ 0 & 0 & i & 0 \end{bmatrix} \tag{7}$$

At this time, the rotation angle of the ZX interaction when the CX gate 41 is operated is "90.0". The rotation angle of IX and the rotation angle of ZI are both "-90.0". In this way, the rotation direction is opposite (the sign of the rotation angle is different) between the case of "$\gamma = 0$" and the case of "$\gamma = \pi/2$". In particular, since the rotation direction of the ZX interaction, which is an interaction between two axes, is opposite, it is expected to be effective in reducing noise caused by over- or under-rotation.

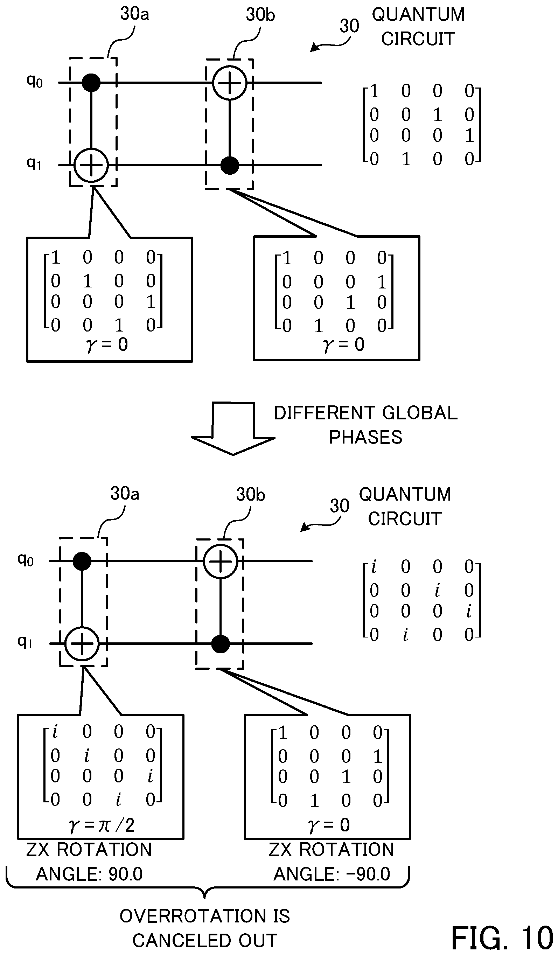

FIG. 10 illustrates an example of an implementation of CX gates with different global phases. For example, regarding the quantum circuit 30 depicted in FIG. 5, a matrix representing gate operations by the quantum circuit 30 in the case where the two CX gates 30a and 30b are both implemented with "$\gamma = 0$" without taking the global phases into consideration is as indicated by Expression (1).

When implementing the quantum circuit 30 in consideration of the global phases, the control computer 100 implements the two CX gates 30a and 30b with different global phases. In the example of FIG. 10, $\gamma$ of the CX gate 30a is set to "$\pi/2$", and $\gamma$ of the CX gate 30b is set to "0". At this time, a matrix representing the gate operation of the CX gate 30a is as indicated by Expression (7). The CX gate 30b has a control bit and a target bit located on opposite bits compared to the CX gate 30a. Therefore, a matrix representing the gate operation of the CX gate 30b is indicated by Expression (8).

$$\begin{bmatrix} 1 & 0 & 0 & 0 \\ 0 & 0 & 0 & 1 \\ 0 & 0 & 1 & 0 \\ 0 & 1 & 0 & 0 \end{bmatrix} \tag{8}$$

As a result, a matrix representing gate operations by the quantum circuit 30 when the CX gates 30a and 30b are implemented with different global phases is as indicated by Expression (9) below.

$$\begin{bmatrix} i & 0 & 0 & 0 \\ 0 & 0 & i & 0 \\ 0 & 0 & 0 & i \\ 0 & i & 0 & 0 \end{bmatrix} \qquad (9)$$

In this case, the rotation directions of the ZX interaction in the gate operation of the CX gate 30a and the gate operation of the CX gate 30b are opposite to each other. Therefore, noise due to over- or under-rotation at the time of the gate operation of the CX gate 30a and noise due to over- or under-rotation at the time of the gate operation of the CX gate 30b cancel each other.

When implementing a CX gate, the control computer 100 transforms the CX gate into an equivalent circuit using, for example, an RZX gate. The RZX gate is also called a cross-resonance gate. The RZX gate is a typical native gate in a quantum computer using a superconducting quantum device. The RZX gate implements a ZX interaction that results in entanglement.

The gate operation of the RZX gate is indicated by Expression (10) below.

$$RZX(\theta) = exp\left(-i\frac{\theta}{2}Z \otimes X\right) =$$

$$\begin{bmatrix} \cos\left(\frac{\theta}{2}\right) & -\sin\left(\frac{\theta}{2}\right) & 0 & 0 \\ -\sin\left(\frac{\theta}{2}\right) & \cos\left(\frac{\theta}{2}\right) & 0 & 0 \\ 0 & 0 & \cos\left(\frac{\theta}{2}\right) & i\sin\left(\frac{\theta}{2}\right) \\ 0 & 0 & i\sin\left(\frac{\theta}{2}\right) & \cos\left(\frac{\theta}{2}\right) \end{bmatrix} \qquad (10)$$

$\theta$ is a parameter indicating the rotation angle of the RZX gate. When the RZX gate is used in the equivalent circuit of the CX gate, $\theta$ of RZX($\theta$) is $\pi/2$ (i.e., $\theta = \pi/2$). The RZX gate when $\theta = \pi/2$ is represented by Expression (11) below.

$$RZX\left(\frac{\pi}{2}\right) = \frac{1}{\sqrt{2}}\begin{bmatrix} 1 & -i & 0 & 0 \\ -i & 1 & 0 & 0 \\ 0 & 0 & 1 & i \\ 0 & 0 & i & 1 \end{bmatrix} \qquad (11)$$

Since the RZX gate alone is not equivalent to the CX gate, 1-qubit gates are arranged around the RZX gate in the equivalent circuit.

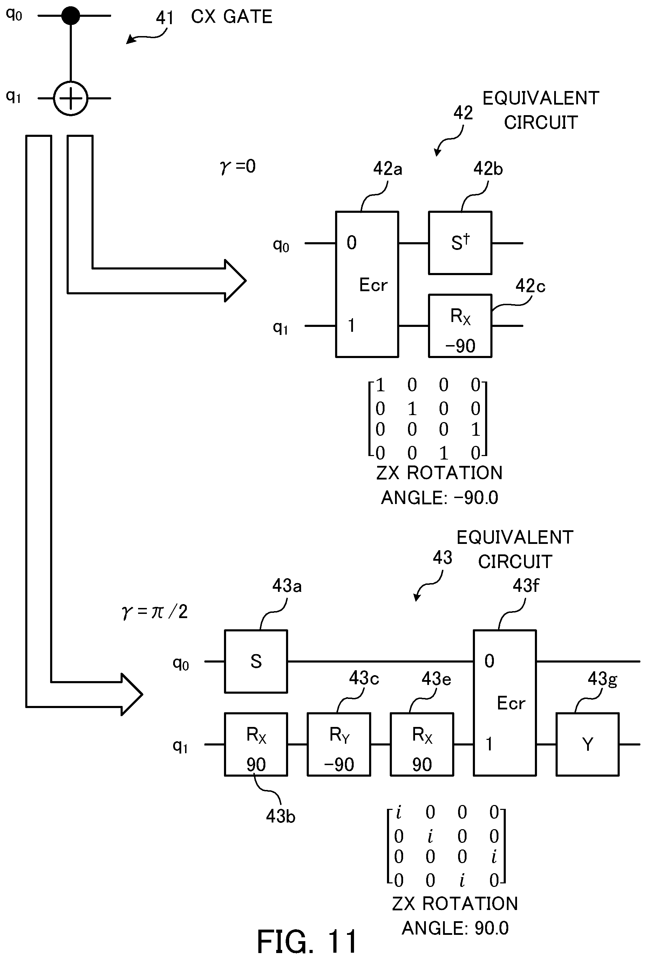

FIG. 11 illustrates an example of equivalent circuits of a CX gate, using RZX gates. A matrix representing the gate operation in consideration of the global phase for the CX gate 41 (CX01 gate) is indicated by Expression (12) below.

$$e^{i\gamma}CX01 = e^{i\gamma}\begin{bmatrix} 1 & 0 & 0 & 0 \\ 0 & 1 & 0 & 0 \\ 0 & 0 & 0 & 1 \\ 0 & 0 & 1 & 0 \end{bmatrix} \qquad (12)$$

As the equivalent circuit of the CX gate 41, an equivalent circuit 42 or an equivalent circuit 43 may be generated according to $\gamma$ indicating the rotation angle of the global phase. When the rotation angle $\gamma$ of the global phase is 0 ($\gamma = 0$), the equivalent circuit 42 is generated, and when $\gamma = \pi/2$, the equivalent circuit 43 is generated.

In the equivalent circuit 42, an RZX gate 42a indicating a ZX interaction between the control bit and the target bit is arranged at the beginning. Next, an S† gate 42b is arranged on the control bit, and an X-axis -90-degree rotation gate 42c is arranged on the target bit.

In the equivalent circuit 43, an S gate 43a is arranged at the beginning of the control bit. On the target bit, an X-axis 90-degree rotation gate 43b, a Y-axis -90-degree rotation gate 43c, and an X-axis 90-degree rotation gate 43e are arranged in this order from the beginning. These gates are followed by an RZX gate 43f indicating a ZX interaction between the control bit and the target bit. Next, a Y gate 43g is arranged on the target bit.

The quantum circuit transforming unit 120 transforms one of consecutive CX gates into the equivalent circuit 42 and transforms the other into the equivalent circuit 43. As a result, the rotation directions of the ZX interactions in realizing the consecutive CX gates are opposite to each other.

Next described is a process of transforming a computation-target quantum circuit when consecutive CX gates are included in the quantum circuit in such a manner that the global phases of the CX gates are different from each other.

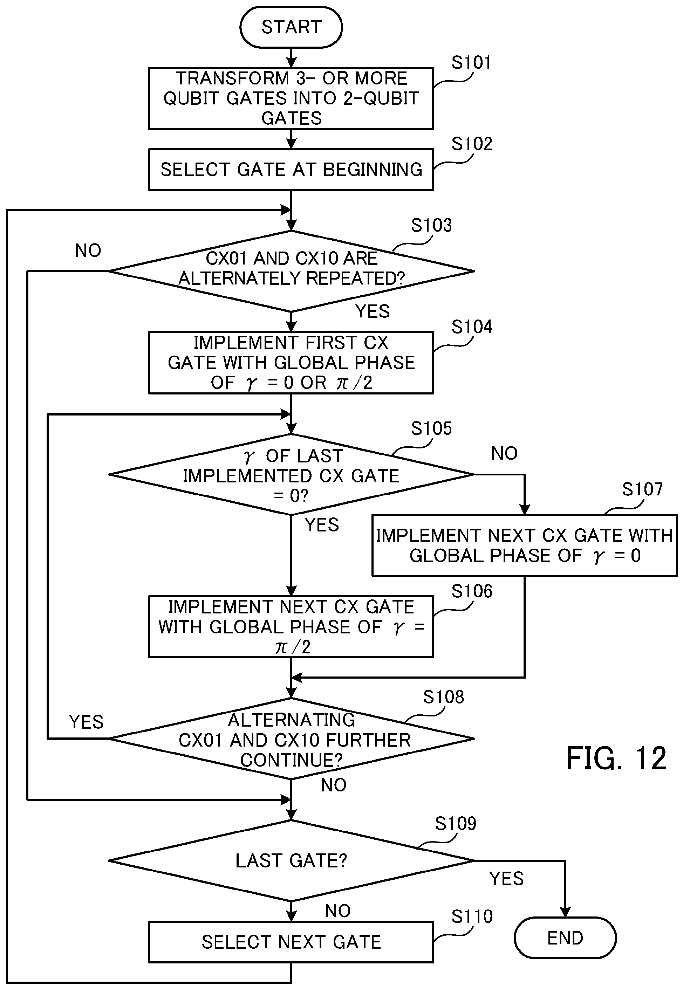

FIG. 12 is a flowchart illustrating an example of a procedure of a quantum circuit transformation process. Hereinafter, the process illustrated in FIG. 12 is described in order of step numbers.

[Step S101] The quantum circuit transforming unit 120 transforms 3- or more qubit gates in a quantum circuit indicated in a computation request as a calculation target into a combination of 1- and 2-qubit gates.

[Step S102] The quantum circuit transforming unit 120 sequentially selects a gate from the beginning (left end) of the quantum circuit.

[Step S103] The quantum circuit transforming unit 120 determines from the selected gate whether CX01 gates and CX10 gates are alternately repeated. When CX01 gates and CX10 gates are alternately repeated, the quantum circuit transforming unit 120 advances the process to step S104. When CX01 gates and CX10 gates are not alternately repeated, the quantum circuit transforming unit 120 advances the process to step S109.

[Step S104] The quantum circuit transforming unit 120 implements the first CX gate among the consecutive CX01 and CX10 gates with a global phase of $\gamma = 0$ or $\gamma = \pi/2$. For example, in the case of implementation with a global phase of $\gamma = 0$, the quantum circuit transforming unit 120 transforms the CX gate into the equivalent circuit 42 illustrated in FIG. 11. In the case of implementation with the global phase of $\gamma = \pi/2$, the quantum circuit transforming unit 120 transforms the CX gate into the equivalent circuit 43 illustrated in FIG. 11.

[Step S105] The quantum circuit transforming unit 120 determines whether $\gamma$ of the global phase of the last implemented CX gate is "0". If $\gamma = 0$, the quantum circuit transforming unit 120 advances the process to step S106. If $\gamma = \pi/2$, the quantum circuit transforming unit 120 advances the process to step S107.

[Step S106] The quantum circuit transforming unit 120 implements the next CX gate with a global phase of $\gamma = \pi/2$. For example, the quantum circuit transforming unit 120 transforms the corresponding CX gate into the equivalent circuit 43 illustrated in FIG. 11. The quantum circuit transforming unit 120 then advances the process to step S108.

[Step S107] The quantum circuit transforming unit 120 implements the next CX gate with the global phase of $\gamma = 0$. For example, the quantum circuit transforming unit 120 transforms the corresponding CX gate into the equivalent circuit 42 illustrated in FIG. 11.

[Step S108] The quantum circuit transforming unit 120 determines whether the alternating CX01 and CX10 gates further continue. The quantum circuit transforming unit 120 advances the process to step S105 when the alternating CX01 and CX10 gates further continue. If there is no CX gate following the last implemented CX gate, the quantum circuit transforming unit 120 advances the process to step S109.

[Step S109] The quantum circuit transforming unit 120 determines whether the selected gate or the last implemented CX gate is the last gate of the quantum circuit. If it is not the last gate, the quantum circuit transforming unit 120 advances the process to step S110. If it is the last gate, the quantum circuit transforming unit 120 ends the quantum circuit transformation process.

[Step S110] The quantum circuit transforming unit 120 selects the next gate and advances the process to step S103.

In this way, the quantum circuit transforming unit 120 is able to generate a quantum circuit in which the effects of noise due to over- or under-rotation are reduced.

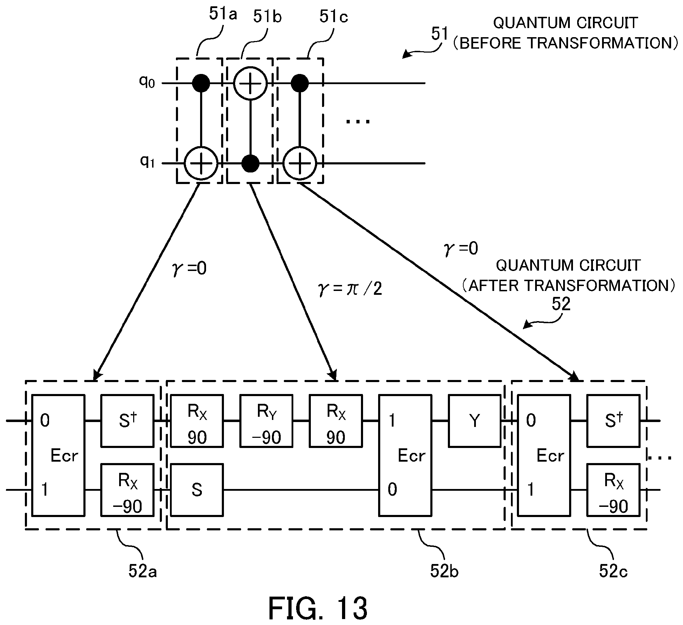

FIG. 13 illustrates an example of transformation results of a quantum circuit. In a quantum circuit 51 before transformation, a plurality of CX gates 51a, 51b, 51c, and so on is consecutively arranged. The first CX gate 51a is a CX01 gate. The second CX gate is a CX10 gate. The third CX gate 51c is a CX01 gate. Thus, the CX01 and CX10 gates are alternately repeated.

The quantum circuit transforming unit 120 transforms, for example, the CX gate 51a into an equivalent circuit 52a with a global phase rotation angle of $\gamma = 0$. In this case, the quantum circuit transforming unit 120 transforms the CX gate 51b following the CX gate 51a into an equivalent circuit 52b with a global phase rotation angle of $\gamma = \pi/2$. Further, the quantum circuit transforming unit 120 transforms the CX gate 51c following the CX gate 51b into an equivalent circuit 52c with a global phase rotation angle of $\gamma = 0$. As a result, a transformed quantum circuit 52 is generated.

When CX01 and CX10 gates are alternately arranged as illustrated in FIG. 13, different global phases are applied to the CX01 gates and the CX10 gates. As a result, over- or under-rotation is canceled out, which reduces the effects of noise.

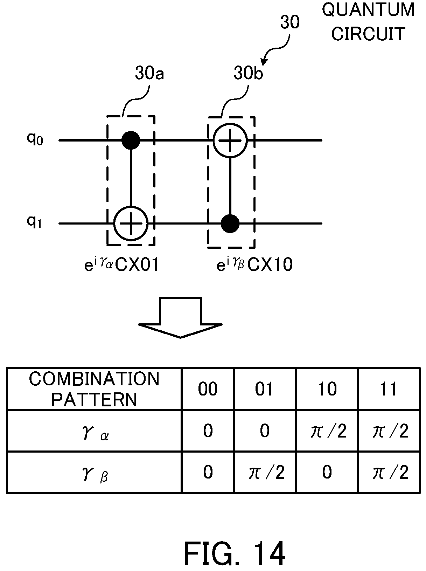

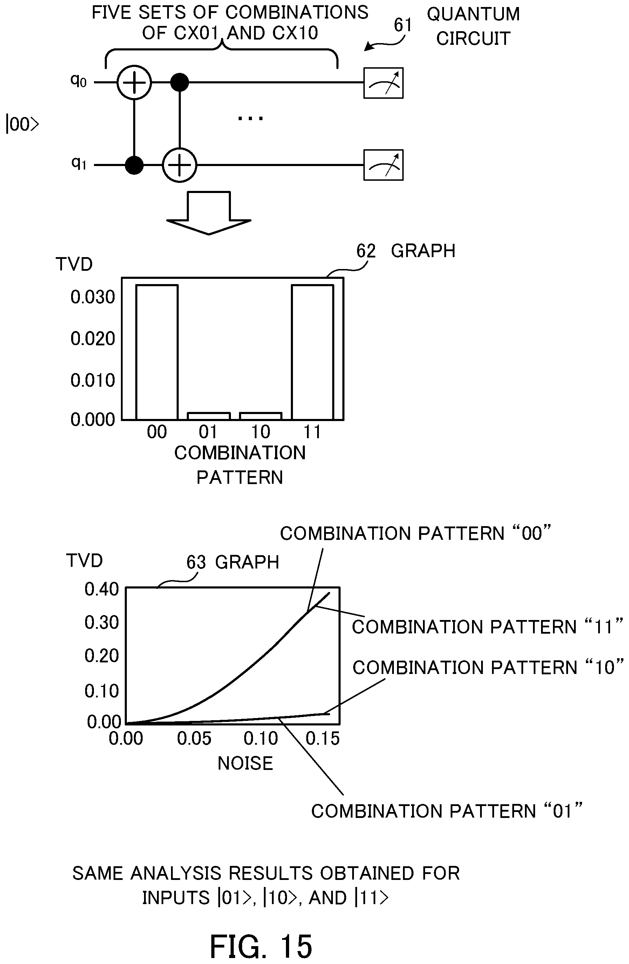

Next, the degree of noise effects according to a combination of global phases of consecutive CX gates is described with reference to FIGS. 14 and 15.

FIG. 14 illustrates an example of combination patterns of global phases in consecutive CX gates. For example, the global phase of the CX gate 30a (CX01 gate) in the quantum circuit 30 is denoted by "$e^{i\gamma\alpha}$" ($\alpha$ is a subscript of $\gamma$). The global phase of the CX gate 30b (CX10 gate) is denoted by "$e^{i\gamma\beta}$" ($\beta$ is a subscript of $\gamma$). When $\gamma_\alpha$ and $\gamma_\beta$ may take "0" or "$\pi/2$", four combination patterns are conceivable as combinations of the values of $\gamma_\alpha$ and $\gamma_\beta$.

The first combination pattern is a combination of "$\gamma_\alpha = 0$" and "$\gamma_\beta = 0$". The first combination pattern is referred to as a combination pattern "00". The second combination pattern is a combination of "$\gamma_\alpha = 0$" and "$\gamma_\beta = \pi/2$". The second combination pattern is referred to as a combination pattern "01". The third combination pattern is a combination of "$\gamma_\alpha = \pi/2$" and "$\gamma_\beta = 0$". The third combination pattern is referred to as a combination pattern "10". The fourth combination pattern is a combination of "$\gamma_\alpha = \pi/2$" and "$\gamma_\beta = \pi/2$". The fourth combination pattern is referred to as a combination pattern "11".

FIG. 15 illustrates an example of analysis results of the degree of noise effects. The analysis results in the example of FIG. 15 are obtained by analyzing the degree of noise effects using a quantum circuit 61 in which five sets of combinations of one CX01 gate and one CX10 gate are arranged.

A total variation distance (TVD) is used as an evaluation index of the degree of noise effects. The TVD is a value using the sum of differences between ideal probabilities without noise and probabilities with noise, and is represented by Expression (13) below.

$$d_{TV}(\mathcal{P}, \mathcal{P}_{ideal}) = \frac{1}{2} \sum_{x \in X} |\mathcal{P}(x) - \mathcal{P}_{ideal}(x)| \qquad (13)$$

$p_{ideal}(x)$ is an occurrence probability of a string of qubit values (bit string x) in an ideal situation (noise-free situation). p(x) is an occurrence probability of the bit string x measured by actual measurement or simulation. In Expression (13), for each bit string x belonging to a set of bit strings X that may occur, the difference is calculated between the probability when there is noise and the probability when there is no noise. Then, 1/2 of the sum of the differences is the TVD. The smaller the value of the TVD, the smaller the noise effects.

A graph 62 represents a TVD value for each combination pattern of the global phases applied to the consecutive CX gates when the input to the quantum circuit 61 is 100). In each of the combination patterns **"00"** and **"11",** since the global phases of the consecutive CX gates are aligned, the effects of noise due to over- or under-rotation are superimposed, and the TVD therefore has a large value. On the other hand, in each of the combination patterns "01" and "10", since the global phases of the consecutive CX gates are different from each other, the effects of the noise due to over- or under-rotation cancel each other, and the TVD therefore has a small value.

A graph 63 represents the relationship between noise and the TVD for each combination pattern of the global phases when the magnitude of noise is intentionally changed. In the combination patterns "00" and "11", the TVD increases as the noise increases. In the combination patterns "01" and "10", the TVD increases as the noise increases, but the increase amount is small compared to the combination patterns "00" and "11".

In this way, when the CX01 gates and the CX10 gates are consecutively arranged, the values of $\gamma$ of the global phases are set to be the combination pattern "01" or the combination pattern "10", and thus it is possible to reduce the effects of noise. FIG. 15 depicts the analysis results obtained when 100) is input; however, it is confirmed that the same analysis results are obtained when each of |01), |10⟩, and |11⟩ is input.

Other Embodiments

In the second embodiment, the value of $\gamma$ of the global phase is set to "0" or "$\pi/2$"; however, the value of $\gamma$ may be set to "$\pi$" or "$3\pi/2$".

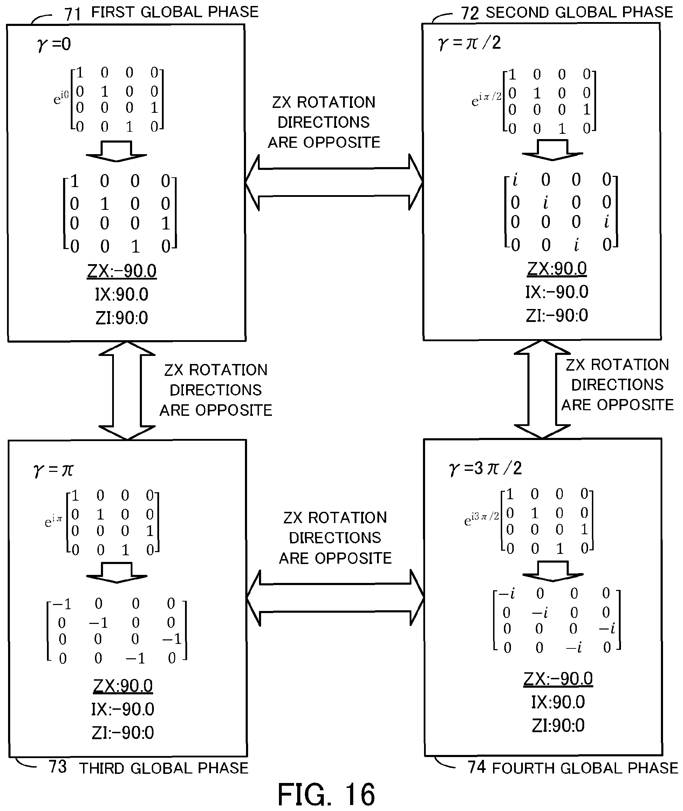

FIG. 16 illustrates an example of combinations of values of $\gamma$ whose rotation directions are opposite to one another. A first global phase 71 is a global phase of $\gamma = 0$. The first global phase 71 has a ZX rotation angle of "-90.0". A second global phase 72 is a global phase of $\gamma = \pi/2$. The second global phase 72 has a ZX rotation angle of "90.0". A third global phase 73 is a global phase of $\gamma = \pi$. The third global phase 73 has a ZX rotation angle of "90.0". A fourth global phase 74 is a global phase of $\gamma = 3\pi/2$. The fourth global phase 74 has a ZX rotation angle of "-90.0".

Therefore, in each of the combination of $\gamma = 0$ and $\gamma = \pi/2$, the combination of $\gamma = 0$ and $\gamma = \pi$, the combination of $\gamma = \pi/2$ and $\gamma = 3\pi/2$, and the combination of $\gamma = \pi$ and $\gamma = 3\pi/2$, the ZX rotation directions are opposite to each other.

When the CX01 and CX10 gates are consecutively arranged, the quantum circuit transforming unit 120 may apply any combination of global phases in which the ZX rotation directions are opposite to each other. This reduces the effects of noise due to over- or under-rotation.

In addition, the second embodiment has described the example in which CX gates are consecutively arranged. However, the effects of noise may be reduced by applying different global phases to other 2-qubit gates that are transformable into equivalent circuits using RZX gates.

The foregoing merely illustrates the principles of the invention. Further, many modifications and variations are possible for those skilled in the art, and the present invention is not limited to the exact construction and application examples illustrated and described above, and all corresponding modifications and equivalents are deemed to be within the scope of the present invention as defined by the appended claims and their equivalents.

Reference Signs List

1 first quantum circuit
1a first 2-qubit gate
1b second 2-qubit gate
1c partial circuit
2 second quantum circuit
2a first equivalent circuit
2b second equivalent circuit
10 quantum circuit design apparatus
11 storing unit
12 processing unit

**Claims**

1.  A quantum circuit design program that causes a computer to execute a process comprising:

    detecting, from a first quantum circuit, a partial circuit in which a first 2-qubit gate and a second 2-qubit gate are consecutively arranged, the first 2-qubit gate having a first qubit as a control bit and a second qubit as a target bit, the second 2-qubit gate having the second qubit as a control bit and the first qubit as a target bit and indicating a same type of gate operation as the first 2-qubit gate; and
    transforming the first 2-qubit gate in the partial circuit into a first equivalent circuit corresponding to a first global phase and transforming the second 2-qubit gate in the partial circuit into a second equivalent circuit corresponding to a second global phase different from the first global phase to thereby generate a second quantum circuit in which the first 2-qubit gate and the second 2-qubit gate in the first quantum circuit are replaced with the first equivalent circuit and the second equivalent circuit, respectively.

2.  The quantum circuit design program according to claim 1, wherein:
    the detecting of the partial circuit includes detecting the partial circuit in which the first 2-qubit gate and the second 2-qubit gate, which are consecutively arranged, are CX gates.

3.  The quantum circuit design program according to claim 1, wherein:

    the transforming of the first 2-qubit gate into the first equivalent circuit includes transforming the first 2-qubit gate into the first equivalent circuit using a cross resonance gate, and
    the transforming of the second 2-qubit gate into the second equivalent circuit includes transforming the second 2-qubit gate into the second equivalent circuit using a cross resonance gate.

4.  The quantum circuit design program according to claim 1, wherein:

    the transforming of the first 2-qubit gate into the first equivalent circuit includes generating the first equivalent circuit indicating a gate operation of a rotation angle in a first rotation direction related to an interaction between two axes, and
    the transforming of the second 2-qubit gate into the second equivalent circuit includes generating the second equivalent circuit indicating a gate operation of a rotation angle in a second rotation direction opposite to the first rotation direction related to the interaction between the two axes.

5. The quantum circuit design program according to claim 1, wherein:

the transforming of the first 2-qubit gate into the first equivalent circuit includes generating the first equivalent circuit corresponding to the first global phase having a rotation angle of 0 or $\pi/2$, and

the transforming of the second 2-qubit gate into the second equivalent circuit includes generating the second equivalent circuit corresponding to the second global phase having a rotation angle of $\pi/2$ responsive to the rotation angle of the first global phase being 0, and generating the second equivalent circuit corresponding to the second global phase having a rotation angle of 0 responsive to the rotation angle of the first global phase being $\pi/2$.

6. The quantum circuit design program according to claim 1, wherein:

the detecting of the partial circuit includes detecting the partial circuit in which the first 2-qubit gate and the second 2-qubit gate are alternately repeated a plurality of times,

the transforming of the first 2-qubit gate into the first equivalent circuit includes transforming each of the plurality of first 2-qubit gates included in the partial circuit into the first equivalent circuit, and

the transforming of the second 2-qubit gate into the second equivalent circuit includes transforming each of the plurality of second 2-qubit gates included in the partial circuit into the second equivalent circuit.

7. A quantum circuit design method executed by a computer, the quantum circuit design method comprising:

detecting, from a first quantum circuit, a partial circuit in which a first 2-qubit gate and a second 2-qubit gate are consecutively arranged, the first 2-qubit gate having a first qubit as a control bit and a second qubit as a target bit, the second 2-qubit gate having the second qubit as a control bit and the first qubit as a target bit and indicating a same type of gate operation as the first 2-qubit gate; and

transforming the first 2-qubit gate in the partial circuit into a first equivalent circuit corresponding to a first global phase and transforming the second 2-qubit gate in the partial circuit into a second equivalent circuit corresponding to a second global phase different from the first global phase to thereby generate a second quantum circuit in which the first 2-qubit gate and the second 2-qubit gate in the first quantum circuit are replaced with the first equivalent circuit and the second equivalent circuit, respectively.

8. A quantum circuit design apparatus comprising:

a processing unit for detecting, from a first quantum circuit, a partial circuit in which a first 2-qubit gate and a second 2-qubit gate are consecutively arranged, the first 2-qubit gate having a first qubit as a control bit and a second qubit as a target bit, the second 2-qubit gate having the second qubit as a control bit and the first qubit as a target bit and indicating a same type of gate operation as the first 2-qubit gate, and transforming the first 2-qubit gate in the partial circuit into a first equivalent circuit corresponding to a first global phase and transforming the second 2-qubit gate in the partial circuit into a second equivalent circuit corresponding to a second global phase different from the first global phase to thereby generate a second quantum circuit in which the first 2-qubit gate and the second 2-qubit gate in the first quantum circuit are replaced with the first equivalent circuit and the second equivalent circuit, respectively.

QUANTUM CIRCUIT
10 DESIGN APPARATUS

11 STORING UNIT

FIRST 2-QUBIT GATE
1a

SECOND 2-QUBIT GATE
1b

1 FIRST QUANTUM CIRCUIT

$q_0$

$\cdots$

$q_1$

1c PARTIAL CIRCUIT

PROCESSING
12 UNIT

DETECT PARTIAL CIRCUIT

TRANSFORM CIRCUIT
(APPLY DIFFERENT GLOBAL PHASES)

$e^{i\gamma} \begin{bmatrix} 1 & 0 & 0 & 0 \\ 0 & 1 & 0 & 0 \\ 0 & 0 & 0 & 1 \\ 0 & 0 & 1 & 0 \end{bmatrix}$

SECOND
2 QUANTUM CIRCUIT

2a

2b

$q_0$

FIRST EQUIVALENT CIRCUIT

$\begin{bmatrix} i & 0 & 0 & 0 \\ 0 & i & 0 & 0 \\ 0 & 0 & 0 & i \\ 0 & 0 & i & 0 \end{bmatrix}$

$\gamma = \pi / 2$

ZX ROTATION
ANGLE: 90.0

SECOND EQUIBALENT CIRCUIT

$\begin{bmatrix} 1 & 0 & 0 & 0 \\ 0 & 0 & 0 & 1 \\ 0 & 0 & 1 & 0 \\ 0 & 1 & 0 & 0 \end{bmatrix}$

$\gamma = 0$

ZX ROTATION
ANGLE: -90.0

$\cdots$

$q_1$

$\cdots$

OVERROTATION OR UNDERROTAION IS CANCELED OUT

FIG. 1

TERMINAL DEVICE 401

TERMINAL DEVICE 402

. . .

20

NETWORK

QUANTUM COMPUTER

300

200

100

CONTROL COMPUTER

QUBIT CONTROL DEVICE

FIG. 2

FIG. 3

FIG. 4

FIG. 5

SWAP GATE    32    EQUIVALENT CIRCUIT

31    32a  32b  32c

$q_0$    $q_0$

$q_1$    $q_1$

$\equiv$

$$\begin{bmatrix} 1 & 0 & 0 & 0 \\ 0 & 0 & 1 & 0 \\ 0 & 1 & 0 & 0 \\ 0 & 0 & 0 & 1 \end{bmatrix}$$

FIG. 6

FIG. 7

35 EQUIVALENT CIRCUIT (CCZ GATE)

FIG. 8

FIG. 9

FIG. 10

FIG. 11

FIG. 12

FIG. 13

QUANTUM
CIRCUIT

30

30a          30b

$q_0$ ──────●───────────⊕──────────

$q_1$ ──────⊕───────────●──────────

$e^{i\gamma_\alpha}CX01$          $e^{i\gamma_\beta}CX10$

| COMBINATION PATTERN | 00 | 01 | 10 | 11 |
|---|---|---|---|---|
| $\gamma_\alpha$ | 0 | 0 | $\pi/2$ | $\pi/2$ |
| $\gamma_\beta$ | 0 | $\pi/2$ | 0 | $\pi/2$ |

# FIG. 14

FIVE SETS OF COMBINATIONS OF CX01 AND CX10 — 61 QUANTUM CIRCUIT

|00⟩

62 GRAPH

TVD — COMBINATION PATTERN

63 GRAPH

COMBINATION PATTERN "00"

COMBINATION PATTERN "11"

COMBINATION PATTERN "10"

COMBINATION PATTERN "01"

NOISE

SAME ANALYSIS RESULTS OBTAINED FOR INPUTS |01⟩, |10⟩, AND |11⟩

FIG. 15

# EP 4 629 140 A1

FIG. 16

30

## INTERNATIONAL SEARCH REPORT

International application No.

**PCT/JP2022/044229**

### A.    CLASSIFICATION OF SUBJECT MATTER

*G06N 10/20*(2022.01)i
FI:    G06N10/20

According to International Patent Classification (IPC) or to both national classification and IPC

### B.    FIELDS SEARCHED

Minimum documentation searched (classification system followed by classification symbols)

G06N 10/00-10/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | JP 2022-521143 A (IONQ, INC.) 06 April 2022 (2022-04-06)<br>paragraphs [0033]-[0036] | 1-8 |
| A | WO 2020/033974 A1 (RIGETTI & CO., INC.) 13 February 2020 (2020-02-13)<br>paragraphs [0003], [0101]-[0124] | 1-8 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **13 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/044229**

| Patent document cited in search report | | | Publication date (day/month/year) | Patent family member(s) | | | Publication date (day/month/year) |
|---|---|---|---|---|---|---|---|
| JP | 2022-521143 | A | 06 April 2022 | US | 2020/0272926 | A1 | |
| | | | | paragraphs [0039]-[0041] | | | |
| | | | | CN | 113614728 | A | |
| WO | 2020/033974 | A1 | 13 February 2020 | US | 2021/0294680 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022059255 A
- JP 2014503890 A
- US 20220231844
- US 20180314969